# EUROPÄISCHE PATENTSCHRIFT

(11) **EP 2 440 968 B1**
(45) Veröffentlichungstag und Bekanntmachung des Hinweises auf die Patenterteilung: **21.09.2016**
(21) Anmeldenummer: 10730112.9
(22) Anmeldetag: 09.06.2010
(51) Int. Cl.: G02F 1/35

(54) **OPTISCHE BANK UND VERFAHREN ZUR HERSTELLUNG DER OPTISCHEN BANK**
OPTICAL BANK AND METHOD FOR PRODUCING THE OPTICAL BANK
BANC OPTIQUE ET PROCÉDÉ DE FABRICATION D'UN BANC OPTIQUE

(30) Priorität: 10.06.2009 DE 102009024944
(43) Veröffentlichungstag der Anmeldung: 18.04.2012
(73) Patentinhaber: Forschungsverbund Berlin e.V., 12489 Berlin (DE)
(72) Erfinder: SAHM, Alexander, 14195 Berlin (DE); MAIWALD, Martin, 12045 Berlin (DE); FIEBIG, Christian, 10249 Berlin (DE); PASCHKE, Karin, 14552 Michendorf (DE)
(74) Vertreter: Gulde & Partner
(86) Internationale Anmeldenummer: PCT/EP2010/058061
(87) Internationale Veröffentlichungsnummer: WO 2010/142711

(56) Entgegenhaltungen:
- EP-A1- 1 602 967
- DE-U1- 9 108 256
- US-A1- 2008 187 014
- MAIWALD M ET AL: "Second-harmonic-generation microsystem light source at 488nm for Raman spectroscopy" OPTICS LETTERS, OSA, OPTICAL SOCIETY OF AMERICA, WASHINGTON, DC, US LNKD- DOI:10.1364/OL.34.000217, Bd. 34, Nr. 2, 15. Januar 2009 (2009-01-15), Seiten 217-219, XP001521848 ISSN: 0146-9592

## Beschreibung

Die vorliegende Erfindung betrifft eine optische Bank, insbesondere eine mikrooptische Bank, mit wenigstens einem Träger zur Aufnahme optischer Bauelemente und wenigstens einem mechanisch mit dem Träger verbundenen Kristall zur Änderung der Frequenz des aus einer Lichtquelle in den Kristall gestrahlten Lichtes, wobei auf dem Träger wenigstens zwei Schienen im Wesentlichen parallel zueinander angeordnet sind, die jeweils wenigstens eine vom Träger abgewandte Oberfläche aufweisen. Weiterhin betrifft die vorliegende Erfindung ein Verfahren zur Herstellung der erfindungsgemäßen optischen Bank.

Die erfindungsgemäße optische Bank dient zur Halterung und gegebenenfalls Erwärmung eines LiNbO₃-Kristalls, insbesondere eines periodisch gepolten LiNbO₃-Kristalls. Durch Änderung der Temperatur des Kristalls lässt sich eine Phasenanpassung erreichen und so durch Frequenzveränderung, insbesondere Frequenzverdoppelung, nicht-lineare optische Effekte erzeugen.

Insbesondere ist die vorliegende Erfindung auf ein hybrides Diodenlasersystem gerichtet, d. h., ein Lasersystem, bei dem die die aktive Komponente darstellende Laserdiode mit einem Linsensystem und einem Kristall in einem System vereint ist.

Es sind optische Systeme bekannt, bei denen die optischen Komponenten einzeln aufgestellt sind oder zusammen auf einem gemeinsamen Träger angeordnet sind. Üblicherweise erfolgt dabei die Halterung und Erwärmung des Kristalls von seiner Unterseite, nämlich über seine auf dem Träger aufliegende Oberfläche. Nachteilig an dieser Ausführungsform ist eine zumindest teilweise erfolgende Dejustage des Kristalls aufgrund seiner je Temperatur unterschiedlichen Wärmeausdehnung und dadurch bedingter Form- und/oder Volumenänderung. Eine derartige Dejustage führt zu einem Kopplungseffizientverlust. Dies wird noch durch die zusätzliche Wärmeausdehnung eines zwischen Kristall und Träger angeordneten Klebers verstärkt. Ein weiterer Nachteil ist ein relativ großer Verlust von Wärme des Kristalls aufgrund seiner großen Auflagefläche auf dem Träger. Eine Lichtquellenvorrichtung ist beispielsweise aus US 2008/0187014 A1 bekannt. DE 91 08 256 U1 beschreibt eine Prismenführungsschiene mit örtlich festklemmbaren Reitern.

Das Problem bei herkömmlichen optischen Bänken sind somit ungewünschte Ausdehnungen und/oder Verschiebungen von Linsen oder Kristallen aufgrund von Temperaturänderungen. Bei diesen unzulässigen Ausdehnungen bzw. Verschiebungen des Kristalls ergeben sich fehlerbehaftete Lichtfrequenzen am Ausgang des Kristalls und gegebenenfalls fehlerbehaftete Lichtstreuungen oder Lichtbündelungen.

Der vorliegenden Erfindung liegt somit die Aufgabe zugrunde, eine optische Bank sowie ein Verfahren zur Herstellung der optischen Bank zur Verfügung zu stellen, wobei die optische Bank derart ausgestaltet ist, dass sie eine einfachen konstruktiven sowie thermisch optimierten Aufbau aufweist und dabei trotzdem ungewollte Dejustagen einzelner optischer Komponenten verhindert bzw. verringert.
Diese Aufgabe wird durch die erfindungsgemäße optische Bank nach Anspruch 1. Vorteilhafte Ausgestaltungen der optischen Bank sind in den Unteransprüchen 2 bis 12 angegeben.

Erfindungsgemäß wird eine optische Bank, und insbesondere eine mikrooptische Bank zur Verfügung gestellt, mit wenigstens einem Träger zur Aufnahme optischer Bauelemente und wenigstens einem mechanisch mit dem Träger verbundenen Kristall zur Veränderung der Frequenz des aus einer Lichtquelle in den Kristall gestrahlten Lichtes, wobei auf dem Träger wenigstens zwei Schienen im Wesentlichen parallel zueinander angeordnet sind, die jeweils wenigstens eine vom Träger abgewandte Oberfläche aufweisen.
Erfindungsgemäß ist die optische Bank derart ausgestaltet, dass die mechanische Verbindung des Kristalls mit dem Träger über die vom Träger abgewandten Oberflächen der Schienen realisiert ist, wobei am Kristall ein Wärmeleitelement zur gezielten Temperierung des Kristalls angeordnet ist, welches an den vom Träger abgewandten Oberflächen der Schienen anliegt. Dabei ist der Kristall bei einer Anordnung der Bank, bei der Flächennormale der Oberflächen der Schienen nach oben weisen, am Wärmeleitelement hängend angeordnet.

D. h., dass zum Zweck der Positionierung des Kristalls auf der optischen Bank bei waagerechter Aufstellung der optischen Bank die Gewichtskraft des Kristalls anteilig von oben auf die Schienen aufgebracht wird. Der Kristall wird dabei nicht auf den Träger aufgelegt, sondern die Auflage bzw. die Aufstellung des Kristalls erfolgt derart, dass dessen Gewichtskraft (anteilig) über die Schienen in den Träger eingeleitet wird. Dabei soll erfindungsgemäß der Fall nicht ausgeschlossen sein, bei dem die optische Bank nicht waagerecht sondern in gedrehter Lage im Raum angeordnet ist. Auch in einer derartigen Position der optischen Bank soll die Kontaktierung über die vom Träger abgewandten Oberflächen der Schienen erfolgen.
Bei im Wesentlichen rechtwinkligem Querschnitt der Schienen ist die jeweils vom Träger abgewandte Oberfläche der Schiene die obere, im Wesentlichen parallel zur Grundfläche des Trägers verlaufende Oberseite.
Der Vorteil der erfindungsgemäßen optischen Bank liegt insbesondere darin, dass Wärmeausdehnungen des Kristalls in Richtung der Längsachse des Kristalls spannungsfrei von dem Wärmeleitelement aufgenommen werden können und sich daher nur unwesentlich bemerkbar machen. Dadurch werden thermisch hervorgerufene Verspannungen und aus Dejustage resultierende Kopplungseffizientverluste eliminiert bzw. weitgehend verringert. Als Lichtquelle ist vorteilhafterweise ein Laser zu verwenden. Die erfindungsgemäße optische Bank ist insbesondere zur Montage bzw. Halterung von LiNbO₃-Kristallen geeignet.

Der Kontakt zu den vom Träger abgewandten Oberflächen der Schienen erfolgt somit zwischen diesen Oberflächen und dem Wärmeleitelement, welches fest mit dem Kristall verbunden ist. Der Kristall ist somit indirekt mit den Oberflächen der Schienen, nämlich über das Wärmeleitelement, verbunden. Das Wärmeleitelement dient neben seiner Funktion zur Temperierung des Kristalls als Aufnahme zur Befestigung und Positionierung des Kristalls. Bei waagerechter Anordnung der optischen Bank wird somit die Gewichtskraft des Kristalls sowie des Wärmeleitelementes durch dieses in die Oberflächen der Schienen anteilig eingeleitet.

Bei Auflage des Wärmeleitelementes auf den Schienen befindet sich der Kristall auf der Seite des Wärmeleitelementes, die dem Träger zugewandt ist. Bei entsprechender Dimensionierung der Schienen sowie des Wärmeleitelementes sowie des Kristalls hängt der Kristall somit zwischen den Schienen. Der Vorteil dieser Ausgestaltung ist, dass bei Wärmeausdehnung des Kristalls senkrecht zu seiner Längserstreckungsrichtung die Ausdehnung durch eine entsprechende Dicke des Wärmeleitelementes kompensiert werden kann, da das Wärmeleitelement bei Temperaturänderung ebenfalls eine Dickenänderung erfährt. Die Mitte des Querschnitts des Kristalls lässt sich somit selbst bei unterschiedlichen Ausdehnungen aufgrund unterschiedlicher Temperaturen wieder in einer im Bezug zu dem Lichtstrahl gewünschten Position anordnen.

Es ist in vorteilhafter Weise vorgesehen, dass der Kristall mittels einer adhäsiv oder kohäsiv wirkenden Verbindung am Wärmeleitelement befestigt ist. D. h., dass bevorzugt eine Klebeverbindung genutzt wird, um den Kristall am Wärmeleitelement zu befestigen.

Das Wärmeleitelement sollte im Wesentlichen eine flach ausgeführte Platte sein. Diese Platte kann gegebenenfalls profiliert sein. Die Dicke des plattenförmigen Wärmeleitelementes sollte dabei derart dimensioniert sein, dass Wärmeausdehnungen des Kristalls kompensiert werden können. Dabei sollte der Wärmeausdehnungskoeffizient des Wärmeleitelementes sich nicht oder nur unwesentlich vom Wärmeausdehnungskoeffizient des Kristalls unterscheiden. Es kann dabei der Kristall einen Wärmeausdehnungskoeffizienten in wenigstens einer Achse α_{Kristall} =15 ppm/K aufweisen und das Wärmeleitelement einen Wärmeausführungskoeffizienten α_{Wärmeleitelement}=17 ppm/K aufweisen.

Das Wärmeleitelement kann dabei mit einem oder mehreren Sockelbereichen ausgestattet sein, wobei sich die Sockelbereiche im Wesentlichen in Richtung der Längserstreckungsrichtung des Wärmeleitelementes und des daran befestigten Kristalls erstrecken. Das Wärmeelement kann ein Sockelelement aufweisen, an dem der Kristall befestigt ist, wobei das Sockelelement an seinen beiden Seiten befindliche Bereiche zur Anlage des Wärmeleitelementes an den Oberflächen der Schienen aufweist und diese Bereiche einen jeweils im Wesentlichen gleichen Abstand zum Sockelbereich aufweisen. D. h., dass der Sockelbereich im Wesentlichen in der Mitte des Wärmeleiteelementes angeordnet ist und vorzugsweise symmetrisch zu den Anlage- bzw. Auflagebereichen positioniert ist. Damit weist das Wärmeleitelement im Querschnitt eine T-Form auf, die sich bevorzugt über die gesamte Länge des Wärmeleitelementes erstreckt. Der Sockelbereich ist dabei bevorzugt ein integraler Bestandteil des Wärmeleitelementes.

In alternativer Ausgestaltung ist vorgesehen, dass das Wärmeleitelement zwei Sockelelemente aufweist, wobei die beiden Sockelelemente zueinander im Wesentlichen parallel angeordnet sind und gleichzeitig zumindest teilweise die Bereiche der Anlage des Wärmeleitelementes an den Oberflächen der Schienen ausbilden, wobei der Kristall zwischen den beiden Sockelelementen am Wärmeleitelement befestigt ist. Auch in dieser Ausgestaltung bietet es sich an, dass die Sockelelemente integrale Bestandteile des Wärmeleitelementes sind. Die Ausgestaltung mit zwei Sockelelementen ist insbesondere zur Kompensation von Wärmeausdehnungen des Kristalls senkrecht zu seiner Längserstreckungsrichtung vorteilhaft, da sich das Wärmeleitelement ebenfalls aufgrund von Wärmezufuhr ausdehnt.
Bedingt durch die Auflage des Wärmeleitelementes auf den Schienen erfolgt bei Wärmeausdehnung eine Verlagerung des Zentrums des Querschnitts des Kristalls nach unten und gleichzeitig die Anhebung des gesamten Wärmeleitelementes, so dass die Wärmeausdehnung des Kristalls senkrecht zu seiner Längserstreckungsrichtung zumindest teilweise ausgeglichen wird.
Ein derartiges mit zwei Sockelelementen ausgestaltetes Wärmeleitelement weist somit ungefähr im Querschnitt eine U-Form auf, die sich gegebenenfalls über die gesamte Länge des Wärmeleitelementes erstreckt. In alternativer Ausführungsform sind die Sockelelemente nicht durchgängig ausgeführt, sondern nur an den äußeren Ecken angeordnet. Die vorliegende Erfindung ist dabei nicht auf eine der beiden Ausgestaltungsformen eingeschränkt, sondern sie kann derart ausgestaltet sein, dass das Wärmeleitelement sowohl das mittig angeordnete Sockelelement sowie die beiden an den äußeren Rändern, im Auflagebereich angeordneten, Sockelelemente aufweist.

Vorteilhafterweise ist der Kristall beheizbar und derart eingerichtet, dass aufgrund der Änderung der Kristalltemperatur eine Phasenanpassung erfolgen kann, so dass die Akzeptanzwellenlänge des in den Kristall eintretenden Lichtes änderbar ist. Zu diesem Zweck umfasst die erfindungsgemäße optische Bank am Wärmeleitelement auf der dem Kristall gegenüberliegenden Seite wenigstens ein Heizelement zur Änderung der Temperatur des Kristalls.

Die optische Bank ist insbesondere dann vorteilhaft ausgebildet, wenn zwischen zwei Schienen wenigstens eine FAC-Linse angeordnet ist, wobei die Befestigung der FAC-Linse mittels jeweils einer Klebeverbindung zwischen einer Stirnseite der FAC-Linse und einer Schiene realisiert ist. Derartige FAC-Linsen sind Zylinderlinsen aus optischem Spezialglas, die besondere Kollaminationseigenschaften aufweisen.
Die quer zur Längserstreckungsrichtung einer FAC-Linse verlaufende Stirnfläche dient somit als Klebefläche an einer Seitenfläche einer Schiene. Somit wird die FAC-Linse nicht auf dem Träger aufgeklebt sondern zwischen die Schienen, möglichst unter Verhinderung der Kontaktierung der Trägeroberfläche, eingeklebt. Der Vorteil dieser Ausgestaltung liegt insbesondere darin, dass die FAC-Linsen in der unkritischen Achse geklebt werden. D. h., dass durch das Aushärten und damit verbundene Schrumpfen des Klebstoffes keine Verspannungen in der FAC-Linse erzeugt werden und zudem der zentrale Bereich der FAC-Linse sich nicht verschiebt. Üblicherweise werden mehrere FAC-Linsen zwischen den Schienen angeordnet, gegebenenfalls in Verbindung mit sogenannten SAC-Linsen. Auch die SAC-Linsen werden in ihren unkritischen Achsen (senkrecht) geklebt

Neben der optimierten Befestigung der Linsen ergibt sich dadurch eine mechanische Versteifung der optischen Bank. Das aus einer Lichtquelle durch die FAC-Linsen in den Kristall gestrahlte Licht kann somit bei temperaturbedingter Form- und/oder Volumen- und/ oder Lageänderung der optischen Komponenten nur noch unwesentlich verzerrt oder verändert werden. Die Schienen der optischen Bank haben somit eine fünffache Funktion, nämlich die Aufnahme des Kristalls an ihrer Oberseite, die Aufnahme der FAC-Linsen zwischen sich, die Versteifung der optischen Bank sowie die Wärmeableitung vom Kristall und wärmetechnische Isolierung des Kristalls gegen die Lichtquelle.
Um ein kompaktes Modul zur Verfügung zu stellen, ist weiterhin vorgesehen, dass die optische Bank des Weiteren wenigstens eine mit dem Träger mechanisch verbundene Lichtquelle zur Erzeugung einer durch den Kristall zu leitenden Lichtstrahlung umfasst. Diese Lichtquelle ist bevorzugt ein Laser, der direkt auf dem Träger befestigt ist.

Zur optimalen Wärmeleitung sowie zur Anpassung des Wärmeausdehnungskoeffizienten des Wärmeleiteelementes an den Wärmeausdehnungskoeffizienten des Kristalls ist vorgesehen, dass das Material des Wärmeleitelementes Kupfer oder eine Kupferlegierung ist. Dabei soll die Erfindung nicht auf diese Werkstoffe eingeschränkt sein, sondern es lassen sich alle Werkstoffe verwenden, die einen entsprechenden Wärmeausdehnungskoeffizienten besitzen. Versuche haben ergeben, dass sich Stahllegierungen für gewisse Anforderungen am besten eignen.

In der Ausgestaltung mit zwei Sockelbereichen an Wärmeleitelementen ist vorteilhafterweise vorgesehen, dass die Sockelbereiche jeweils eine Höhe hS aufweisen und der Kristall eine Höhe hK aufweist, wobei die beiden Höhen in einem Verhältnis von hS/ hK = 0,3 bis 0,7 zueinander stehen. Die Höhe bemisst sich dabei von der Kante des Sockelelementes bzw. des Kristalls, die eine maximale Entfernung zu der vom Wärmeleitelement aufgespannten Ebene aufweist, bis zu der den Sockelbereichen bzw. dem Kristall zugewandten Oberfläche des Wärmeleitelementes. Bei Sockelbereichen mit rechteckigem Querschnitt ist dies gleichzeitig eine Begrenzungskante einer auf den Schienen aufliegenden Oberfläche. Vorzugsweise sollte dabei das Verhältnis der Höhen entsprechend der Wärmeausdehnungskoeffizienten der verwendeten Materialien der Sockelbereiche bzw. des Kristalls sein. Bei einem bevorzugten Verhältnis der Wärmeausdehnungskoeffizienten α_{Wärmeleitelement}/ α_{Kristall} = 0,44 sollte auch das Verhältnis von hS/ hK = 0,44 sein. In einer besonderen erfindungsgemäßen Ausgestaltung der optischen Bank ist vorgesehen, dass an wenigstens einer Schiene, insbesondere an ihrer die mechanische Verbindung mit dem Kristall bewirkenden Oberseite, Stromleitungen angeordnet sind. Mittels strukturierter Metallschichten realisierte Stromleitungen, die bevorzugt im Bereich der mechanischen Kontaktierung zwischen der Schiene und dem Wärmeleitelement vorhanden sind, lässt sich zwischen der Schiene und dem Wärmeleitelement wenigstens ein elektrischer Kontakt herstellen, so dass unabhängig von der Position des Kristalls in Längsrichtung des Träges wenigstens ein elektrischer Kontakt mit dem Kristall realisiert ist.

Erfindungsgemäß wird außerdem ein Verfahren zur Herstellung der erfindungsgemäßen optischen Bank zur Verfügung gestellt, bei dem vorgesehen ist, dass bei Klebung des Kristalls auf das Wärmeleitelement der Kristall auf eine Temperatur zu erwärmen ist, die 17/15 der gewählten Aushärttemperatur des Klebers zur Befestigung des Kristalls beträgt. Dadurch wird gewährleistet, dass betriebsbedingte Temperaturänderungen, insbesondere starke Erwärmungen, nicht zu unzulässigen Spannungen im Kristall und/oder der Klebeverbindung führen können.

Die vorliegende optische Bank hat somit den Vorteil, mehrere FAC-Linsen in unkritischer Achse zu haltern und mittels Klebeverbindung zu befestigen. Alle aktiven Elemente auf der Bank, wie z. B. Laserdioden, die jeweils getrennt voneinander anzusteuern sind, sowie Thermoelemente, Kühlkörper und Linearmotore zum Nachführen des Lasers können dabei in einfacher Weise über die an den Schienen angebrachten Stromleitungen mit Energie versorgt und/ oder angesteuert werden. Die aktiven Elemente können dabei im Wesentlichen thermisch voneinander entkoppelt werden. Daneben ergibt sich der Vorteil einer mechanischen Versteifung der Bank.

Die durch die Stromleitungen bedingte Erwärmung wird aufgrund ihrer Anordnung auf den Schienen und damit in ausreichender Entfernung vom Laser abgeleitet bzw. verteilt. Somit ergibt sich auch eine thermische Entkopplung der Stromleitungen vom Laser.

Durch die bevorzugte hängende Anordnung des Kristalls am Wärmeleitelement wird die kritische Ausführungsachse des gesamten Kristallpackages gedreht und durch ein geeignetes Design kompensiert. Es ergibt sich eine bessere Positionierungsmöglichkeit des Kristalls bei Verwendung der Flip-Chip-Technologie, da der Kristall bei der Montage auf der dem Träger zugewandten Seite des Wärmeleitelementes angeordnet wird. Zudem wird bei der hängenden Montage des Kristalls dieser besser vor Zugluft und vor Verunreinigungen durch herabfallende Partikel geschützt. Durch den erfindungsgemäßen konstruktiven Aufbau werden relativ einfache Herstellungsverfahren zur Produktion der optischen Bank ermöglicht, so z. B. durch Extrusion des Trägers sowie Dickschichttechniken zum Aufbringen der Stromleitungen. Es lässt sich dadurch die optische Bank mit einem deutlich verringerten Zeit- und Fertigungsaufwand herstellen.

Die erfindungsgemäße optische Bank dient somit zur Herstellung von kompakten Lasermodulen, die gegebenenfalls auch als Handlasergeräte eingesetzt werden können. Ein solches kompaktes Modul ist z. B. für Displayanwendungen, Spektroskopieanwendungen und im Bereich der Laserkühlung vorteilhaft einsetzbar.

Die Erfindung wird im folgenden anhand der beiliegenden Zeichnungen erläutert.

Es zeigt dabei
- Fig. 1:: eine erfindungsgemäße optische Bank in perspektivischer Ansicht,
- Fig. 2:: eine erste Ausführungsform eines Wärmeleitelementes in perspektivischer Ansicht,
- Fig. 3:: eine zweite Ausführungsform eines Wärmeleitelementes in perspektivischer Ansicht und
- Fig. 4:: eine perspektivische Ansicht des Wärmeleitelementes mit Sockelelementen.

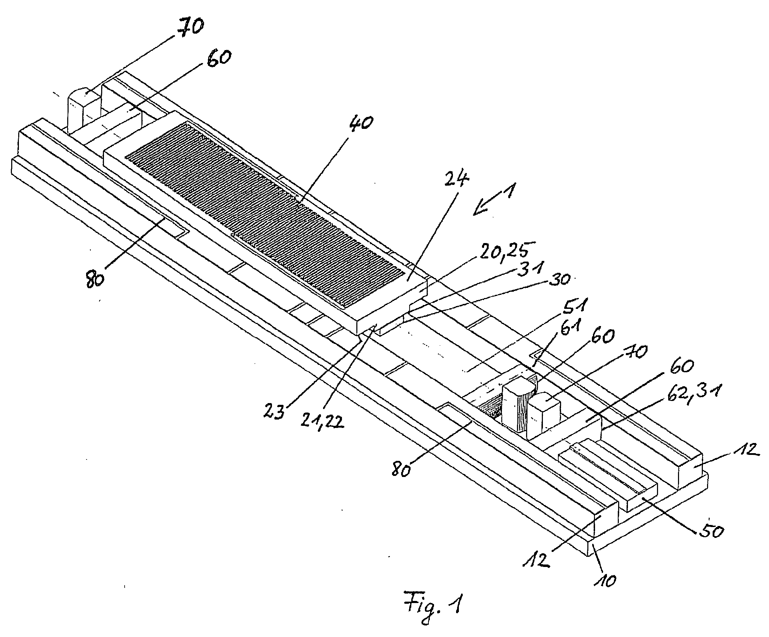

Die in Fig. 1 dargestellte erfindungsgemäße optische Bank 1 umfasst im Wesentlichen einen Träger 10, auf dem zwei Schienen 12 angeordnet sind. Diese Schienen 12 können dabei Einzelteile sein oder auch ein integraler Bestandteil des Trägers 10. Auf den Schienen 12 liegt das Wärmeleitelement 20 beidseitig auf. Am Wärmeleitelement 20 ist hängend der Kristall 30 angeordnet. Zur Befestigung des Kristalls 30 am Wärmeelement 20 ist an den jeweiligen Kontaktflächen eine Klebeverbindung 31 realisiert. Zur Realisierung eines Wärmeeintrages in den Kristall 30 ist auf dem Wärmeleitelement 20 auf der dem Kristall 30 gegenüberliegenden Seite und somit auf der vom Träger abgewandten Oberfläche 24 ein Heizelement 40 angeordnet. Energiezufuhr zu diesem Heizelement 40 bewirkt eine Erwärmung des Wärmeleitelementes 20 und somit die Erwärmung des daran befestigten Kristalls 30, so dass eine Phasenanpassung des mittels einer Lichtquelle 50, welche auf dem Träger 10 befestigt ist, ausgesandten Lichtstrahls 51 realisierbar ist.

Bevor der aus der Lichtquelle 50 emittierte Lichtstrahl 51 in den Kristall 30 eintritt, wird er erfindungsgemäß durch zwei FAC-Linsen 60 sowie zwischen den FAC-Linsen 60 angeordnete SAC-Linsen 70 geleitet. Die SAC-Linsen 70 dienen der lateralen Kollomination in einer Richtung.
In Strahlrichtung nach dem Kristall 30 ist ebenfalls die Anordnung einer FAC-Linse 60 und einer weiteren SAC-Linse 70 vorgesehen. Die FAC-Linsen 60 sind mittels Klebeverbindungen 31 an ihren Stirnflächen 62 an den Schienen 12 befestigt, so dass sie vorteilhafterweise keinen Kontakt mit ihren Längsseiten zum Träger 10 aufweisen. Die Befestigung der FAC-Linsen 60 erfolgt somit in der mit gestrichelter Linie angedeuteten unkritischen Achse 61. Bedingt durch die Länge der Schienen 12 können mehrere FAC-Linsen 60 hintereinander an diesen befestigt werden.

Auf den Schienen 12 sind vorteilhafterweise Stromleitungen 80 zur Energieversorgung von (opto-)elektrischen Bauelementen auf der optischen Bank vorgesehen. Durch die Anordnung der Stromleitungen 80 auf den Schienen 12 sind diese bedingt durch die Schienenhöhe räumlich relativ weit von der Lichtquelle 50 entfernt, so dass eine weitgehende wärmetechnische Entkopplung der Stromleitungen von der Lichtquelle 50 realisiert ist.

Die Stromleitungen 80 können durch eine metallische Strukturierung der Oberfläche der Schienen 12 realisiert werden. Diese metallische Strukturierung kann z. B. aus einer strukturierten Kupferschicht bestehen. Diese Kupferstrukturen können bedingt durch unterschiedliche Dicken zur Leitung von Strömen unterschiedlich hoher Stromstärke geeignet sein. Vorteilhafterweise bestehen die Schienen 12 sowie gegebenenfalls auch der Träger 10 aus Aluminiumnitrid, um ungewünschte Wärme gezielt abführen zu können. Der Träger 10 sollte vorteilhafterweise eine Breite von 5 bis 20 mm, insbesondere 10 mm, und eine Länge von 30 bis 70 mm, insbesondere 50 mm aufweisen. Durch die Anordnung der Schienen 12 auf dem Träger 10 ergibt sich eine Erhöhung des axialen und polaren Widerstandsmomentes, so dass die Biege- und Torsionssteifigkeit der optischen Bank erhöht ist.

Die Erfindung ist dabei allerdings nicht auf die Verwendung eines Wärmeleitelementes 20 eingeschränkt, sondern es kann alternativ auch vorgesehen sein, dass ein entsprechend breit geformter Kristall 30 selbst auf den Schienen 12 zur Auflage kommt.

Bei dieser Ausgestaltung umfasst der Kristall 30 vorteilhafterweise einen vertieften Bereich, der bis in den Lichtstrahl 51 hineinreicht.

In beiden Ausgestaltungsformen beträgt eine vorteilhafte Höhe der Schienen 12 zwischen 1 und 3 mm, vorteilhafterweise 1,6 mm. Die Schienenhöhe sollte derart bemessen werden, dass FAC-Linsen 60 zwischen den Schienen 12 an ihren Stirnflächen 62 geklebt werden können, ohne dass sie 60 den Träger 10 direkt kontaktieren.

Durch die Beheizung des Kristalls 30 über das Wärmeleitelement 20 mittels des Heizelementes 40 lässt sich die Gitterperiode des Kristalls 30 aufgrund der Änderung des Brechungsindizes verändern. Dadurch wiederum lässt sich eine Phasenanpassung des Kristalls an das in den Kristall gestrahlte Licht erreichen, womit ein Maximum an sichtbarem Licht erzeugt werden kann.

Als Kleber zur Realisierung der Klebeverbindungen 31 sollte vorteilhafterweise ein UV-Kleber verwendet werden, um zusätzliche thermische Belastungen der optischen Bank bei Herstellung der Klebeverbindungen zu vermeiden.

Somit erfüllt die optische Bank auch die Funktion der spannungsminimierenden Halterung von optischen Bauelementen sowie eine damit einhergehende mechanische Versteifung der optischen Bank. Es wird somit ein steifes mechanisches System ausgebildet, welches gegebenenfalls zusammen mit einem Deckel oder einer Haube einen Teil eines Gehäuses ausbilden kann.

Die Stromleitungen 80 lassen sich z. B. durch spezielle Drucktechnik auf die Schienen 12 aufbringen.
Die Stromleitungen 80 führen von externen, nicht dargestellten Stromquellen zu optoelektronischen Bauelementen, wie z. B. dem Heizelement 40 und/oder dem der Lichtquelle 50.

Die Klebeverbindungen 31 sind derart ausgestaltet, dass durch sie ebenfalls Wärme geleitet werden kann. Vorteilhafterweise weisen die Klebeverbindungen einen ähnlichen Wärmeausdehnungskoeffizienten wie die durch die Klebeverbindungen 31 verbundenen Bauteile auf. Als Material des Wärmeleitelementes 20 kommt insbesondere Kupfer oder eine Kupferlegierung in Frage, wobei der Wärmeausdehnungskoeffizient des Materials des Wärmeleitelementes 20 vorteilhafterweise genauso groß ist wie der Wärmeausdehnungskoeffizient des Kristalls 30. In alternativer Ausführungsform kann das Wärmeleitelement auch aus Stahl, insbesondere Edelstahl, gefertigt sein. Die Klebeverbindung 31 am Kristall ist eine andere als bei den Linsen. Die Klebung des Kristall erfolgt mit einem thermisch leitenden Klebstoff, der mit Temperatur ausgehärtet wird. Die Linsen und die Halterung des Kristalls werden mit UV-aushärtendem Klebstoff geklebt.

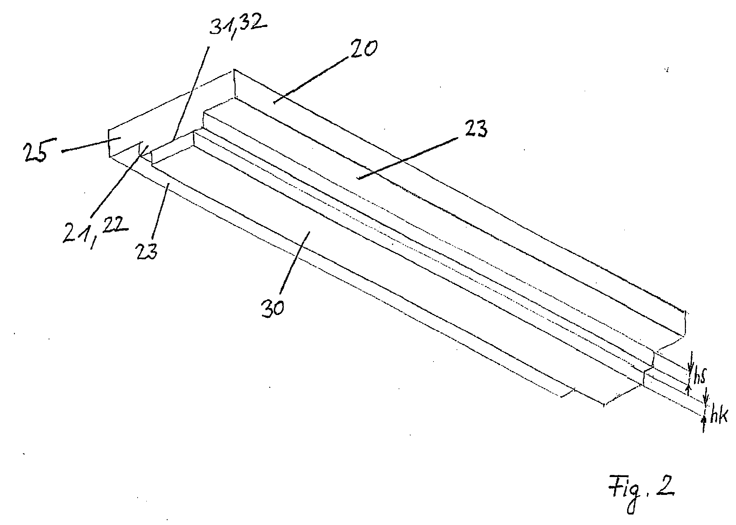

In den Figuren 2 bis 4 sind unterschiedliche Ausführungsformen des Wärmeleitelementes 20 dargestellt. Eine vorteilhafte Ausführungsform ist in Figur 2 dargestellt, die ebenfalls in der Fig. 1 dargestellten optischen Bank 1 Verwendung findet. Dieses Wärmeleitelement 20 umfasst in einem zentralen Bereich ein Sockelelement 21, welches durch seine Anordnung Auflagebereiche 23 an den unteren Seitenbereichen des Wärmeleitelementes 20 freilässt. An dem Sockelelement 21 ist mittels Klebeverbindung 31 der Kristall 30 befestigt. Dabei ist der Kristall 30 schmaler als das Sockelelement 21 ausgeführt, so dass beidseitig am Kristall 30 Absätze vorhanden sind. Die Höhe des Sockelelementes 21 ist mit hS gekennzeichnet und die Höhe des Kristalls ist mit hK gekennzeichnet. Durch die Auflage des Wärmeleitelementes im Auflagebereich 23 auf den Schienen 12, wie in Fig. 1 dargestellt, hängt der Kristall 30 im Bereich des Lichtstrahls 51. Änderungen geometrischer Maße des Wärmeleitelementes 20 bzw. des Kristalls 30 aufgrund von Temperaturänderungen sind relativ unkritisch.

Durch die T-Form des Wärmeleitelementes 20 ragt der Kristall 30 in die optische Achse des Lasers hinein. Die Wärmeausdehnungskoeffizienten der verwendeten Materialien des Wärmeleitelementes 20, des Kristalls 30 sowie der Klebeverbindung 31 sind aneinander angepasst. Der Wärmeausdehnungskoeffizient des Kristalls sollte α_{Kristall} = 15 ppm/K in Strahlrichtung sein, der Wärmeausdehnungskoeffizient des Wärmeleitelementes sollte α_{Wärmeleitelement} =17 ppm/K sein und der Wärmeausdehnungskoeffizient der Klebeverbindung sollte α_{Klebstoff} =15 ppm/K sein. Dadurch kann der Kristall außerordentlich spannungsarm aufgebaut werden. Gemäß des erfindungsgemäßen Herstellungsverfahrens wird bei der Klebung der Kristall um einen Faktor von 17/15 der Aushärtetemperatur der Klebeverbindung erwärmt.

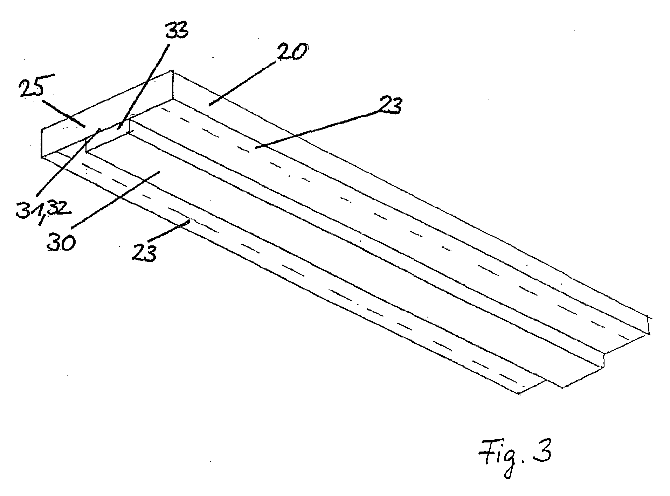

In Fig. 3 ist eine einfache Ausführungsform des Wärmeleitelementes 20 dargestellt, bei der das Wärmeleitelement 20 eine wesentliche flache Plattenform aufweist. Der Kristall 30 ist wiederum in einem zentralen Bereich an der Unterseite des Wärmeleitelementes 20 angeordnet, so dass seitliche Randbereiche als Auflagebereiche 23 verwendet werden können.

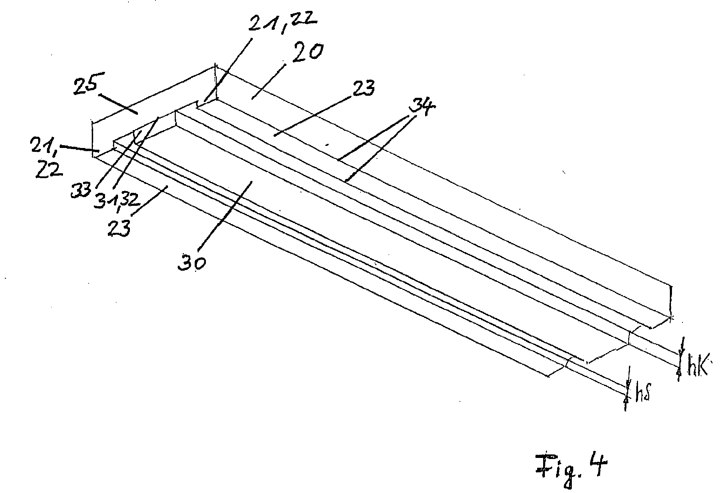

Eine vorteilhafte Ausgestaltung des Wärmeleitelementes 20 ist in Fig. 4 dargestellt, bei der an der Unterseite des Wärmeleitelementes 20 an den jeweiligen Längskanten zwei Sockelelemente 21 angeordnet sind, die gleichzeitig mit ihren nach unten weisenden Oberflächen die Auflagebereiche 23 zur Auflage auf den Schienen 12 realisieren.
In alternativer Ausführungsform (nicht dargestellt) sind die Sockelelemente 21 nicht durchgängig ausgeführt, sondern nur an den äußeren Ecken angeordnet.
Eine derartige unterbrochene Sockelelementausgestaltung kann in jeder der dargestellten Sockelanordnung auftreten.
Zwischen den beiden Sockelelementen 21 ist der Kristall 30 mittels Klebeverbindung 31 befestigt. Bei Temperaturerhöhung des Wärmeleitelementes und damit des Kristalls 30 erfolgt eine Dickenzunahme des Kristalls 30 und somit eine Absenkung seiner unteren Oberfläche. Dies würde eine Verlagerung des Zentrum-Querschnitts des Kristalls aus dem Lichtstrahl 51 herbeiführen. Auf Grund der Anordnung der Sockelelemente 21, die auf den Schienen 12 aufliegen, bewirkt die Temperaturerhöhung allerdings auch eine Dickenzunahme der Sockelelemente 21 bzw. des Wärmeelementes 20, so dass die Oberfläche des Wärmeleitelementes 20, an dem der Kristall 30 befestigt ist, einen größeren Abstand zum Träger 10 einnehmen würde. Durch entsprechende Auswahl der Materialien und damit der Wärmeausdehnungskoeffizienten lässt sich somit die Ausdehnung des Kristalls 30 kompensieren.
Eine weitere Möglichkeit der Kompensation der Wärmeausdehnungen besteht darin, das Wärmeleitelement 20 an seinen Auflagebereichen 23 stärker zu beheizen, um einen an die Wärmeausdehnung des Kristalls 30 angepassten Hub zu erreichen.

Damit durch die Klebeverbindungen 31 zwischen dem Kristall 30 und dem Wärmeleitelement 20 keine Verunreinigungen der Wärmeleitelement-Stirnseiten 25 bzw. der Sockelelement-Stirnseiten 22 und der Kristall-Stirnseiten 33 auftritt, ist vorgesehen, dass an der Kristall-Stirnseite 33 und je nach Anlage an der Sockelelement-Stirnseite 22 oder der Wärmeleitelement-Stirnseite 25 eine Phase oder Verrundung angeordnet ist, in der sich bei Durchführung der Klebung hervorgequetschter Kleber sammeln kann.

### Bezugszeichenliste

- Optische Bank: 1
- Träger: 10
- Schiene: 12

- Wärmeleitelement: 20
- Sockelelement: 21
- Sockelelement-Stirnseite: 22
- Auflagebereich: 23
- vom Träger abgewandte Oberfläche: 24
- Wärmeleitelement-Stirnseite: 25

- Kristall: 30
- Klebeverbindung: 31
- Fase, Abrundung: 32
- Kristall-Stirnseite: 33

- Begrenzungskante: 34

- Höhe des Sockelelementes: hS
- Höhe des Kristalls: hK

- Heizelement: 40

- Lichtquelle: 50
- Lichtstrahl: 51

- FAC-Linse: 60
- unkritische Achse: 61
- Stirnfläche: 62

- SAC-Linse: 70

- Stromleitung: 80

## Patentansprüche

1. Optische Bank (1), insbesondere mikrooptische Bank, mit wenigstens einem Träger (10) zur Aufnahme optischer Bauelemente und wenigstens einem mechanisch mit dem Träger verbundenen Kristall (30) zur Änderung der Frequenz des aus einer Lichtquelle (50) in den Kristall gestrahlten Lichtes, wobei auf dem Träger wenigstens zwei Schienen (12) im Wesentlichen parallel zueinander angeordnet sind, die jeweils wenigstens eine vom Träger abgewandte Oberfläche (24) aufweisen,
wobei die optische Bank derart ausgestaltet ist, dass die mechanische Verbindung des Kristalls (30) mit dem Träger (10) über die vom Träger (10) abgewandten Oberflächen (24) der Schienen (12) realisiert ist, wobei am Kristall ein Wärmeleitelement (20) angegordnet ist, welches an den vom Träger (10) abgewandten Oberflächen (24) der Schienen (12) anliegt **dadurch gekennzeichnet, dass** bei einer Anordnung der Bank (1), bei der Flächennormale der Oberflächen der Schienen nach oben weisen, der Kristall (30) am Wärmeleitelement (20) hängend angeordnet ist.

2. Optische Bank nach Anspruch 1,
**dadurch gekennzeichnet,**
**dass** der Kristall mittels einer adhäsiv oder kohäsiv wirkenden Verbindung am Wärmeleitelement befestigt ist.

3. Optische Bank nach wenigstens einem der Ansprüche 1 oder 2 ,
**dadurch gekennzeichnet,**
**dass** das Wärmeleitelement eine im Wesentlichen flach ausgeführte Platte ist.

4. Optische Bank nach wenigstens einem der Ansprüche 1 oder 2,
**dadurch gekennzeichnet,**
**dass** das Wärmeleitelement ein Sockelelement aufweist, an dem der Kristall befestig ist, wobei das Sockelelement zu an seinen beiden Seiten befindlichen Anlagebereichen des Wärmeleitelementes an den Oberflächen der Schienen einen jeweils im Wesentlichen gleichen Abstand aufweist.

5. Optische Bank nach wenigstens einem der Ansprüche 1 oder 2 und 4,
**dadurch gekennzeichnet,**
**dass** das Wärmeleitelement zwei Sockelelemente aufweist, wobei die beiden Sockelelemente zueinander im Wesentlichen parallel angeordnet sind und gleichzeitig zumindest teilweise die Anlagebereiche des Wärmeleitelementes an den Oberflächen der Schienen ausbilden, und wobei der Kristall zwischen den beiden Sockelelementen am Wärmeleitelement befestigt ist.

6. Optische Bank nach wenigstens einem der vorhergehenden Ansprüche,
**dadurch gekennzeichnet,**
**dass** der Kristall beheizbar und derart eingerichtet ist, dass auf Grund der Änderung der Kristalltemperatur eine Phasenanpassung des durch den Kristall gestrahlten Lichtes erreicht werden kann.

7. Optische Bank nach wenigstens einem der vorhergehenden Ansprüche,
**dadurch gekennzeichnet,**
**dass** am Wärmeleitelement auf der dem Kristall gegenüberliegenden Seite wenigstens ein Heizelement zur Änderung der Temperatur des Kristalls angeordnet ist.

8. Optische Bank nach wenigstens einem der vorhergehenden Ansprüche,
**dadurch gekennzeichnet,**
**dass** zwischen zwei Schienen wenigstens eine FAC-Linse angeordnet ist, wobei die Befestigung der FAC-Linse mittels jeweils einer Klebeverbindung zwischen einer Stirnseite der FAC-Linse und einer Schiene realisiert ist.

9. Optische Bank nach wenigstens einem der vorhergehenden Ansprüche,
**dadurch gekennzeichnet,**
**dass** die optische Bank des weiteren wenigstens eine mit dem Träger mechanisch verbundene Lichtquelle zur Erzeugung einer durch den Kristall zu leitenden Lichtstrahlung umfasst.

10. Optische Bank nach wenigstens einem der vorhergehenden Ansprüche,
**dadurch gekennzeichnet,**
**dass** das Material des Wärmeleitelements Kupfer oder eine Kupferlegierung ist.

11. Optische Bank nach wenigstens einem der Ansprüche 5 - 11,
**dadurch gekennzeichnet,**
**dass** die Sockelbereiche jeweils eine Höhe hS aufweisen und der Kristall eine Höhe hK aufweist, wobei die Höhen in dem Verhältnis hS/hK = 0,44 stehen.

12. Optische Bank nach wenigstens einem der vorhergehenden Ansprüche,
**dadurch gekennzeichnet,**
**dass** an wenigstens einer Schiene, insbesondere an ihrer die mechanische Verbindung mit Kristall bewirkenden Oberseite, Stromleitungen angeordnet sind.

## Claims

1. An optical bank (1), particularly a micro-optical bank, with at least one carrier (10) for receiving optical components, and at least one crystal (30) mechanically connected to the carrier for changing the frequency of the light irradiated into the crystal from a light source (50), wherein at least two rails (12) are arranged substantially in parallel to each other on the carrier which comprise at least one surface (24) facing away from the carrier,
wherein the optical bank is configured in such a way that the mechanical connection of the crystal (30) to the carrier (10) is realized via the surfaces (24) of the rails (12) facing away from the carrier (10), wherein
a heat conducting element (20) is arranged at the crystal abutting the surfaces (24) of the rails (12) facing away from the carrier (10), **characterized in that**, in an arrangement of the bank (1) in which surface normals of the surfaces of the rails point upwards, the crystal (30) is arranged in a suspended manner on the heat conducting element (20).

2. The optical bank according to claim 1,
**characterized in that**
the crystal is attached to the heat conducting element via an adhesively or cohesively acting bond.

3. The optical bank according to at least one of claims 1 or 2,
**characterized in that**
the heat conducting element is a plate that is realized substantially flat.

4. The optical bank according to at least one of claims 1 or 2,
**characterized in that**
the heat conducting element comprises a pedestal element to which the crystal is attached, wherein the pedestal element has a substantially equal distance to abutment regions on both of its sides where the heat conducting element abuts the surfaces of the rails, respectively.

5. The optical bank according to at least one of claims 1 or 2 and 4,
**characterized in that**
the heat conducting element comprises two pedestal elements, wherein both pedestal elements are arranged substantially in parallel to each other, and simultaneously form at least partially the abutment regions where the heat conducting element abuts the surfaces of the rails, and wherein the crystal is attached to the heat conducting element between both pedestal elements.

6. The optical bank according to at least one of the preceding claims,
**characterized in that**
the crystal is heatable and configured such that a phase matching of the light irradiated through the crystal can be achieved based on the change of the crystal temperature.

7. The optical bank according to one of the preceding claims,
**characterized in that**
at least one heating element for changing the temperature of the crystal is arranged at the heat conducting element on the side opposite to the crystal.

8. The optical bank according to at least one of the preceding claims,
**characterized in that**
at least one FAC lens is arranged between two rails, wherein the attachment of the FAC lens is realized between a front face of the FAC lens and a rail via a respective adhesive bond.

9. The optical bank according to at least one of the preceding claims,
**characterized in that**
the optical bank further comprises at least one light source mechanically connected to the carrier for generating a light radiation to be guided through the crystal.

10. The optical bank according to at least one of the preceding claims,
**characterized in that**
the material of the heat conducting element is copper or a copper alloy.

11. The optical bank according to at least one of claims 5 - 11,
**characterized in that**
the pedestal regions each have a height hS, and the crystal has a height hK, wherein the heights are in a ratio of hS/hK = 0,44 relative to each other.

12. The optical bank according to at least one of the preceding claims,
**characterized in that**
power lines are arranged on at least one rail, and particularly on its top side that brings about the mechanical connection to the crystal.

## Revendications

1. Banc optique (1), en particulier un banc micro-optique, présentant au moins un support (10) pour le logement de composants optiques et au moins un cristal (30) relié mécaniquement au support pour la modification de la fréquence de la lumière diffusée à partir d'une source lumineuse (50), au moins deux rails (12) qui comprennent au moins une surface (24) opposée au support, respectivement, étant disposés de manière sensiblement parallèle entre eux sur le support,
le banc optique étant configuré de telle manière que la liaison mécanique du cristal (30) avec le support (10) soit réalisée par les surfaces (24) des rails (12) opposées au support (10),
un élément thermoconducteur (20) qui prend appui contre les surfaces (24) des rails (12) opposées au support (10) étant disposé sur le cristal, **caractérisé en ce que**, dans le cas d'un agencement du banc (1) dans lequel des normales surfaciques des surfaces des rails sont dirigées vers le haut, le cristal (30) est disposé de manière suspendue au niveau de l'élément thermoconducteur (20).

2. Banc optique selon la revendication 1,
**caractérisé en ce que**
le cristal est fixé à l'élément thermoconducteur au moyen d'une liaison agissant de manière adhésive ou cohésive.

3. Banc optique selon au moins l'une des revendications 1 ou 2,
**caractérisé en ce que**
l'élément thermoconducteur est une plaque réalisée de manière sensiblement plate.

4. Banc optique selon au moins l'une des revendications 1 ou 2,
**caractérisé en ce que**
l'élément thermoconducteur comprend un élément de socle auquel est fixé le cristal, l'élément de socle étant sensiblement équidistant, respectivement, de zones d'appui situées sur ses deux côtés où l'élément thermoconducteur prend appui contre les surfaces des rails.

5. Banc optique selon au moins l'une des revendications 1 ou 2 et 4,
**caractérisé en ce que**
l'élément thermoconducteur comprend deux éléments de socle, les deux éléments de socle étant disposés de manière sensiblement parallèle entre eux et formant en même temps au moins partiellement les zones d'appui où l'élément thermoconducteur prend appui contre les surfaces des rails, et le cristal étant fixé à l'élément thermoconducteur entre les deux éléments de socle.

6. Banc optique selon au moins l'une des revendications précédentes,
**caractérisé en ce que**
le cristal peut être chauffé et est configuré de telle manière qu'une adaptation de phase de la lumière irradiée à travers le cristal puisse être atteinte sur la base de la modification de la température du cristal.

7. Banc optique selon au moins l'une des revendications précédentes,
**caractérisé en ce qu'**
au moins un élément de chauffage pour modifier la température du cristal est disposé au niveau de l'élément thermoconducteur sur le côté opposé au cristal.

8. Banc optique selon au moins l'une des revendications précédentes,
**caractérisé en ce qu'**
au moins une lentille FAC est disposée entre deux rails, la fixation de la lentille FAC étant réalisée entre une face frontale de la lentille FAC et un rail au moyen de respectivement une liaison par collage.

9. Banc optique selon au moins l'une des revendications précédentes,
**caractérisé en ce que**
le banc optique comprend en outre au moins une source lumineuse liée mécaniquement au support pour générer un rayonnement lumineux à être guidé à travers le cristal.

10. Banc optique selon au moins l'une des revendications précédentes,
**caractérisé en ce que**
le matériau de l'élément thermoconducteur est du cuivre ou un alliage de cuivre.

11. Banc optique selon au moins l'une des revendications 5 - 11,
**caractérisé en ce que**
les zones de socle présentent une hauteur hS, respectivement, et le cristal présente une hauteur hK, les hauteurs étant dans un rapport hs/hK = 0,44.

12. Banc optique selon au moins l'une des revendications précédentes,
**caractérisé en ce que**
des lignes électriques sont disposées sur au moins un rail, en particulier sur son côté supérieur qui entraîne la liaison mécanique avec le cristal.
